# EUROPÄISCHE PATENTSCHRIFT

(11) **EP 3 032 191 B1**
(45) Veröffentlichungstag und Bekanntmachung des Hinweises auf die Patenterteilung: **03.03.2021**
(21) Anmeldenummer: 15197044.9
(22) Anmeldetag: 30.11.2015
(51) Int. Cl.: F25B 31/00, F25B 30/02

(54) **WÄRMEPUMPENVORRICHTUNG**
HEAT PUMP DEVICE
DISPOSITIF DE POMPES À CHALEUR

(30) Priorität: 02.12.2014 DE 102014017718
(43) Veröffentlichungstag der Anmeldung: 15.06.2016
(73) Patentinhaber: Stiebel Eltron GmbH & Co. KG, 37603 Holzminden (DE)
(72) Erfinder: Golüke, Wilfried, 33034 Brakel (DE); Merkl, Nikolaj, 37603 Holzminden (DE); Schaumlöffel, Michael, 37671 Höxter (DE)

(56) Entgegenhaltungen:
- EP-A1- 0 017 975
- WO-A1-2014/082177
- DE-A1- 2 841 799
- DE-A1- 3 044 898
- DE-A1-102011 016 070
- DE-A1-102012 108 043
- US-A1- 2007 108 934

## Beschreibung

Die vorliegende Erfindung betrifft eine Wärmepumpenvorrichtung.

Wärmepumpen weisen einen Verdampfer, einen Verdichter, ein Expansionsventil und einen Verflüssiger auf. Die Wärmepumpe wird typischerweise dazu verwendet, Brauch- oder Heizwasser zu erwärmen.

Bei moderneren Wärmepumpen weist der Verdichter einen Motor auf, dessen Drehzahl regelbar ist. Diese Drehzahlregelung erfolgt über eine Leistungselektronikeinheit. Die Leistungselektronik muss typischerweise gekühlt werden. Diese Kühlung kann mittels Heizungswasser bzw. Brauchwasser der Wärmepumpe erfolgen. Dies hat den Vorteil, dass die Verlustleistung der Leistungselektronik als Nutzleistung der Wärmepumpe zugeführt werden kann WO2014/082177 A1 offenbart eine Wärmepumpe gemäß dem Oberbegriff des Anspruchs 1.

Es ist eine Aufgabe der vorliegenden Erfindung, eine Wärmepumpenvorrichtung vorzusehen, welche über eine effektivere Kühlung ihrer Leistungselektronik verfügt, ohne dabei die Leistungselektronik zu beschädigen.

Diese Aufgabe wird durch eine Wärmepumpenvorrichtung nach Anspruch 1 gelöst.

Somit wird eine Wärmepumpenvorrichtung mit einem Verdampfer, einem Drehzahl-regelbaren Verdichter, einem Expansionsventil und einem Verflüssiger vorgesehen. Die Wärmepumpenvorrichtung weist ferner eine Leistungselektronikeinheit zum Steuern des Drehzahl-regelbaren Verdichters und eine Kühleinheit zum Kühlen der Leistungselektronikeinheit auf. Die Kühleinheit weist einen Kühlkanal zum Kühlen der Leistungselektronikeinheit, einen Bypass parallel zu dem Kühlkanal und eine Einstelleinheit zum Einstellen des Kühlmedium-Volumenstroms durch den Bypass auf. Somit kann mittels der Einstelleinheiten eingestellt werden, wie viel Kühlmedium durch den Kühlkanal und den Bypass fließt, so dass die Kühlung der Leistungselektronikeinheit damit gesteuert werden kann.

Gemäß einem Aspekt der vorliegenden Erfindung ist die Einstelleinheit als ein Ventil an dem Bypass oder als eine Pumpe in Reihe zu dem mindestens einen Kühlkanal vorgesehen.

Gemäß der vorliegenden Erfindung ist die Wärmepumpenvorrichtung zur Erwärmung von Heizungs- oder Brauchwasser ausgestaltet und das Heizungs- oder Brauchwasser stellt das Kühlmedium für die Kühleinheit dar.

Die Erfindung betrifft den Gedanken, dass ein Bypass zu dem Kühlzweig für die Leistungselektronik vorgesehen wird. Somit kann das sonst für die Leistungselektronik verwendete Heizungswasser an der Leistungselektronikeinheit vorbei geführt werden. Dies ist insbesondere dann vorteilhaft, wenn die Temperatur der Leistungselektronikeinheit beispielsweise aufgrund der vorgenommenen Kühlung soweit absinkt, dass Feuchtigkeit auf den Komponenten der Leistungselektronik kondensieren kann. Somit wird eine Kühleinheit für die Leistungselektronikeinheit vorgesehen, welche zum einen zum Kühlen der Leistungselektronik verwendet werden kann und zum anderen über einen Bypass verfügt, um das zum Kühlen der Leistungselektronikeinheit verwendete Kühlmedium wie beispielsweise das Heizungswasser an der Leistungselektronikeinheit vorbei zu führen. Dies erfolgt in Abhängigkeit der Temperatur der Leistungselektronikeinheit.

Somit weist die Leistungselektronikeinheit einen Temperatursensor auf, welcher seine Daten an eine Kühlungssteuereinheit weiterleitet, welche den Durchfluss an Kühlmedium durch die Kühleinheit der Leistungselektronik steuert. Hierbei kann die Steuereinheit insbesondere denjenigen Anteil des Kühlmediums steuern, welcher durch den Bypass an der Kühleinheit der Leistungselektronik vorbei geführt wird.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt ein Blockschaltbild einer Wärmepumpenvorrichtung gemäß der Erfindung,
- Fig. 2A bis 2D: zeigen jeweils eine schematische Darstellung einer Leistungselektronikeinheit und einer Kühlung für die Leistungselektronikeinheit gemäß der Erfindung, und
- Fig. 3: zeigt eine schematische, perspektivische Schnittdarstellung einer Ausführungsform einer Ventileinheit gemäß der Erfindung.

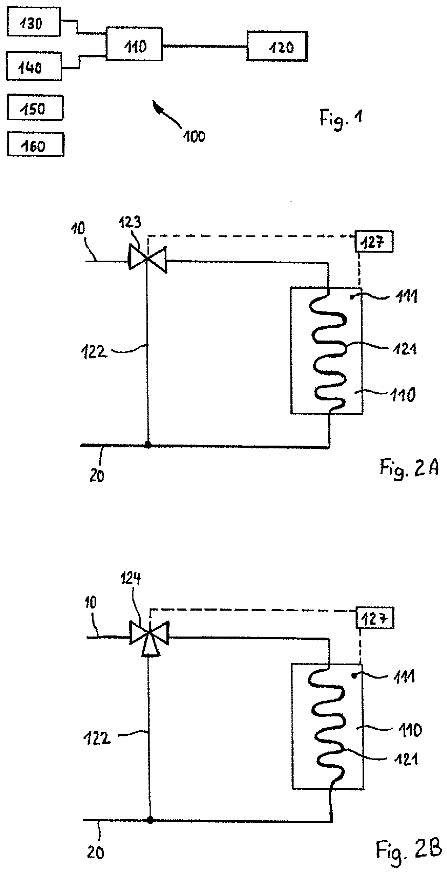

Fig. 1 zeigt ein Blockschaltbild einer Wärmepumpenvorrichtung gemäß der Erfindung. Die Wärmepumpenvorrichtung 100 weist einen Verdampfer 130, einen Drehzahl-regelbaren Verdichter 140, ein Expansionsventil 150 und einen Verflüssiger 160 auf. Die Drehzahl des Drehzahl-gesteuerten Verdichters 140 wird über eine Leistungselektronikeinheit 110 gesteuert, d. h. die Leistungselektronikeinheit kann die Drehzahl des Motors des Verdichters steuern. Die Leistungselektronikeinheit 110 kann auch optional zum Steuern der Drehzahl eines Lüfters des Verdampfers 130 verwendet werden. Die Leistungselektronikeinheit 110 wird durch eine Kühleinheit 120 gekühlt.

Die Kühleinheit 120 verwendet zur Kühlung der Leistungselektronikeinheit das Heizungswasser oder Brauchwasser, welches durch die Wärmepumpenvorrichtung zu erwärmen ist. Hierbei wird ein Heizungsrücklauf 10 und ein Heizungsvorlauf 20 an die Kühleinheit 120 der Leistungselektronikeinheit 110 angeschlossen.

Fig. 2A bis 2D zeigen jeweils eine schematische Darstellung einer Leistungselektronikeinheit und einer Kühlung für die Leistungselektronikeinheit gemäß der Erfindung.

In Fig. 2A bis 2D ist jeweils ein Blockschaltbild einer Leistungselektronikeinheit und einer Kühleinheit für die Leistungselektronikeinheit gemäß der Erfindung gezeigt. Die Leistungselektronikeinheit 110 wird durch die Kühleinheit 120 flüssig gekühlt. Dazu kann die Kühleinheit 120 Kühlkanäle 121 aufweisen, welche in Kontakt stehen mit der Leistungselektronikeinheit 110 und dazu dienen, die durch die Leistungselektronikeinheit 110 erzeugte Wärme abzuführen. Die Leistungselektronikeinheit 110 verfügt über einen Temperatursensor 111. Das Ausgangssignal des Temperatursensors 111 kann an eine Kühlsteuereinheit 127 weitergeleitet werden. Die Kühleinheit 120 weist ebenfalls einen Bypass 122 auf, welcher parallel zu der Leistungselektronikeinheit 110 und den Kühlkanälen 121 vorgesehen ist.

Die Kühleinheit 120 ist als Teil eines Heizungskreises der Wärmepumpenvorrichtung ausgestaltet. Weiter strömt ein Volumenstrom durch den Bypass 122 durch den Verflüssiger 160. Der Volumenstrom durch den mindestens einen Kühlkanal 121 kann somit parallel zu dem Volumenstrom durch den Verflüssiger 160 strömen.

Die Kühleinheit 120 weist als Zulauf den Heizungsrücklauf 10 und als Ablauf den Heizungsvorlauf 20 auf.

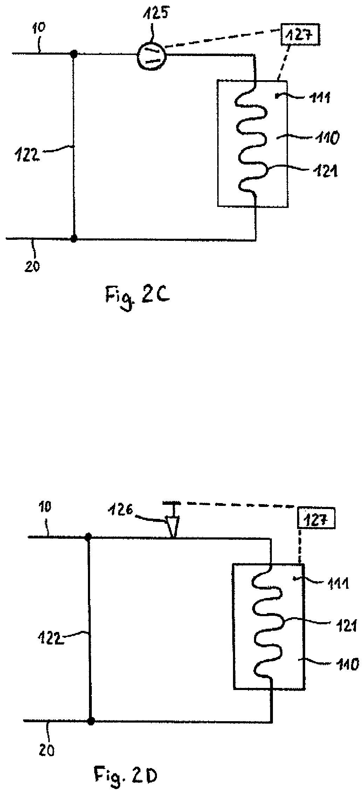

Gemäß der Erfindung ist die Steuereinheit 127 dazu ausgestaltet, in Abhängigkeit der Temperatur der Leistungselektronikeinheit 110 den Durchfluss des Heizungs- oder Brauchwassers durch die Kühlkanäle 121 zu steuern. Je weniger Heizungs- oder Brauchwasser als Kühlmedium durch die Kühlkanäle 121 fließt, desto mehr Kühlmedium muss durch den Bypass 122 und umgekehrt fließen. Um dies zu gewährleisten, kann wie in Fig. 2A ein Ventil 123 und wie in Fig. 2B ein Drei-Wege-Ventil 124 vorgesehen werden. In dem Ausführungsbeispiel von Fig. 2C ist eine Pumpe 125 vorgesehen, welche den Fluss des Kühlmediums durch die Kanäle 121 steuert. In dem Ausführungsbeispiel von Fig. 2D ist ein Ventil 126 vorgesehen, welches den Fluss des Kühlmediums durch die Kanäle 121 steuert.

Gemäß einem weiteren Aspekt der Erfindung ist die Kühlsteuereinheit 127 dazu ausgestaltet, in einem Temperaturbereich zwischen 5° C und 80° C einen Teil des Kühlmediumstroms durch den Bypass 122 fließen zu lassen.

Gemäß einem weiteren Aspekt der Erfindung kann der gewünschte Volumenstrom des Kühlmediums durch Abstimmen der Druckverluste in dem Bypass und in den Kühlkanälen ermöglicht werden.

Gemäß einem weiteren Aspekt der vorliegenden Erfindung kann ein Ventil mit einem thermischen Stellantrieb vorgesehen werden, welcher dazu ausgestaltet ist, den Bypass zu öffnen, wenn die Austrittstemperatur höher ist als ein vorab bestimmter Wert. Das Ventil kann den Bypass ferner schließen, wenn die Austrittstemperatur geringer ist als ein vorbestimmter Wert.

Alternativ dazu können die Volumenströme durch den Bypass und die Kanäle 121 durch ein elektrisch betätigtes Ventil gesteuert werden. Dieses Ventil kann den Bypass öffnen, wenn eine Temperatur der Leistungselektronikeinheit einen vorbestimmten Wert überschreitet. Der Bypass kann mittels des Ventils wieder geschlossen werden, wenn die Temperatur der Leistungselektronikeinheit unter einen vorbestimmten Wert fällt.

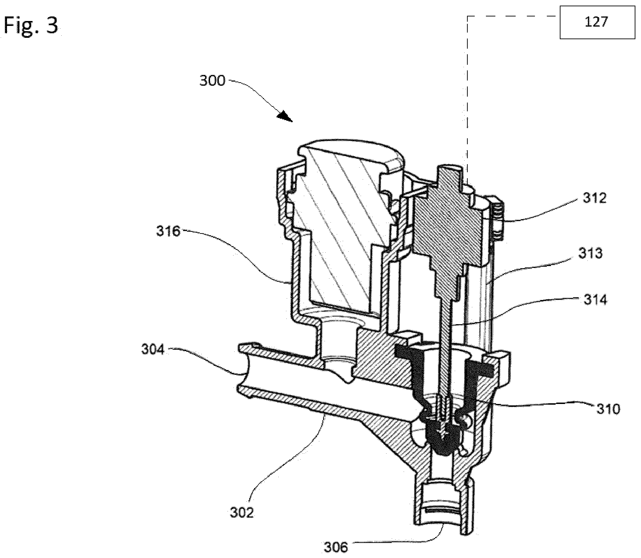

Fig. 3 zeigt eine schematische, perspektivische Schnittdarstellung einer Ausführungsform einer Ventileinheit 300 als Beispiel einer Einstelleinheit gemäß einem weiteren Aspekt der Erfindung. Die Ventileinheit 300 umfasst ein Ventilgehäuse 302 mit Ablauf 304 und Zulauf 306, wobei die Ventileinheit 300 auch in anderen Ausführungsbeispielen zum umgekehrten Einbau ausgestaltet ist. Der Fluidstrom durch die Ventileinheit wird über die Position eines Ventils 310 gesteuert. Die Position des Ventils 310 wird über einen Hub in Verlängerung des Zulaufes 306 gesteuert, der einen beispielsweise rechten Winkel mit dem Ablauf 304 bildet. Der Hub des Ventils 310 wird durch einen Steppermotor bzw. Schrittmotor 312 gesteuert, der mittels einer Schrittmotorbefestigung 313 an dem Ventilgehäuse 302 angebracht ist. In anderen Beispielen werden Alternativen zum Steppermotor 312, beispielsweise ein Getriebemotor oder andere Antriebsmittel, vorgesehen.

Ein Ventilsitz des Ventils 310 ist im Beispiel mitsamt seiner Abdichtungs- und Bewegungselastizität direkt auf einer Schubstange 314 des Schrittmotors 312 montiert. Dies ermöglicht, dass die Schubstange 314 nicht in unerwünschten Kontakt mit dem die Ventileinheit 300 durchströmenden Fluid kommt. In Fig. 3 ist weiter eine optionale Aufnahme 316 gezeigt, die von dem Ventilgehäuse 302 abzweigt und zur Aufnahme eines Automatik-Entlüfters, wie er Fachleuten auf dem Gebiet geläufig ist, ausgestaltet ist.

Gemäß einem weiteren Aspekt der Erfindung kann der Schrittmotor 312 ein unipolarer Schrittmotor sein, der mit einer Spannung von 12 V Gleichstrom betrieben wird, welche direkt von einer Regelelektronik, beispielsweise der Kühlsteuereinheit 127, angeboten wird. Vorzugsweise beträgt der Ventilhub 0 bis 13 mm, besonders bevorzugt 0 bis 7 mm. Vorzugsweise beträgt eine Schubkraft des Schrittmotors 312 höchstens 35 N.

In diesem Beispiel wird der Schrittmotor 312 geregelt, bei zunehmender Temperatur der Leistungselektronikeinheit 110 in Richtung eines Öffnens des Ventils 310 zu steuern und/oder bei abnehmender Temperatur der Leistungselektronikeinheit 110 in Richtung eines Schließens des Ventils 310 zu steuern, wodurch der Kühlmedium-Volumenstrom durch die Ventileinheit 300 und damit auch durch den Bypass 122 angepasst und schließlich die Temperatur der Leistungselektronikeinheit 110 geregelt wird.

## Patentansprüche

1. Wärmepumpenvorrichtung, mit
einem Verdampfer (130),
einem Drehzahl-regelbaren Verdichter (140),
einem Expansionsventil (150),
einem Verflüssiger (160),
einer Leistungselektronikeinheit (110) zum Steuern des Drehzahl-regelbaren Verdichters (140), ein Temperatursensor (111) zum Messen der Temperatur der Leistungselektronikeinheit und
einer Kühleinheit (120) zum Kühlen der Leistungselektronikeinheit (110),
wobei die Kühleinheit (120) mindestens einen Kühlkanal (121) zum Kühlen der Leistungselektronikeinheit (110), einen Bypass (122) der parallel zu dem mindestens einen Kühlkanal (121) und der Leistungselektronikeinheit (110) angeordnet ist und eine Einstelleinheit (123, 124, 125, 126, 300) zum Einstellen eines Kühlmedium-Volumenstroms durch den Bypass (122) aufweist, **dadurch gekennzeichnet, dass** die Kühleinheit (120) eine Kühlsteuereinheit (127) aufweist, welche den Kühlmedium-Volumenstrom durch den Bypass (122) und/oder den mindestens einen Kühlkanal (121) in Abhängigkeit der Temperatur der Leistungselektronikeinheit (110) steuert,
wobei die Wärmepumpenvorrichtung zur Erwärmung von Heizungs- und/oder Brauchwasser ausgestaltet ist, einen Heizungskreis mit einem Heizungsvorlauf und einem Heizungsrücklauf aufweist und das Heizungs- und/oder Brauchwasser das Kühlmedium der Kühleinheit (120) darstellt,
wobei die Kühleinheit (120) als Teil des Heizungskreises der Wärmepumpenvorrichtung ausgestaltet ist,
wobei die Kühleinheit (120) als Zulauf den Heizungsrücklauf (10) und als Ablauf den Heizungsvorlauf (20) aufweist,
wobei ein Volumenstrom durch den Bypass (122) den Verflüssiger (160) durchströmt.

2. Wärmepumpenvorrichtung nach Anspruch 1, wobei die Einstelleinheit (123 - 126, 300) ein Ventil (123, 124, 310) an dem Bypass (122) oder eine Pumpe (125) in Reihe zu dem mindestens einen Kühlkanal (121) aufweist.

3. Wärmepumpenvorrichtung nach einem der Ansprüche 1 bis 2, wobei die Einstelleinheit eine Ventileinheit (300) mit einem Ventilgehäuse (302) aufweist.

4. Wärmepumpenvorrichtung nach Anspruch 3, wobei die Ventileinheit (300) ein Ventil (310) und weiter einen Schrittmotor (312) umfasst, der eingerichtet ist, das Ventil (310) zu steuern.

5. Wärmepumpenvorrichtung nach Anspruch 4, wobei ein Ventilsitz des Ventils (310) auf einer Schubstange (314) des Schrittmotors (312) montiert ist.

6. Wärmepumpenvorrichtung nach einem der Ansprüche 3 bis 6, wobei das Ventilgehäuse (302) eine Aufnahme für einen Automatik-Entlüfter (316) umfasst.

7. Wärmepumpenvorrichtung nach Anspruch 1, wenn rückbezogen auf Anspruch 4 oder 5, wobei die Kühlsteuereinheit (127) eingerichtet ist, den Schrittmotor (312) bei zunehmender Temperatur der Leistungselektronikeinheit (110) in Richtung eines Öffnens des Ventils (310) zu steuern und/oder bei abnehmender Temperatur der Leistungselektronik (110) in Richtung eines Schließens des Ventils (310) zu steuern.

## Claims

1. A heat pump device, comprising
an evaporator (130),
a variable-speed compressor (140),
an expansion valve (150),
a condenser (160),
a power electronics unit (110) for controlling the variable-speed compressor (140), and
a cooling unit (120) for cooling the power electronics unit (110),
wherein the cooling unit (120) has at least one cooling duct (121) for cooling the power electronics unit (110), a bypass (122) which is arranged parallel to the at least one cooling duct (121) and the power electronics unit (110) and a setting unit (123, 124, 125, 126, 300) for setting a cooling medium volume flow rate through the bypass (122), wherein the cooling unit (120) has a cooling control unit (127), which controls the cooling medium volume flow rate through the bypass (122) and/or the at least one cooling duct (121) as a function of a temperature of the power electronics unit (110),
wherein the heat pump device is configured for warming heating and/or service water and the heating and/or service water represents the cooling medium of the cooling unit (120),
wherein the cooling unit (120) is configured as part of a heating circuit of the heat pump device,
wherein the cooling unit (120) comprises the heating return (10) as the inflow and the heating flow (20) as outflow,
wherein a volume flow rate through the bypass (122) flows through the condenser (150).

2. The heat pump device according to claim 1, wherein the setting unit (123 - 126, 300) has a valve (123, 124, 310) on the bypass (122) or a pump (125) in series with the at least one cooling duct (121).

3. The heat pump device according to any of claims 1 to 2, wherein the setting unit has a valve unit (300) with a valve housing (302).

4. The heat pump device according to claim 3, wherein the valve unit (300) comprises a valve (310) and also a stepper motor (312) which is arranged to control the valve (310).

5. The heat pump device according to claim 4, wherein a valve seat of the valve (310) is mounted on a thrust rod (312) of the stepper motor (312).

6. The heat pump device according to any of claims 3 to 6, wherein the valve housing (302) comprises a mount for an automatic air vent (316).

7. The heat pump device according to claim 1, when dependent on claim 4 or 5, wherein the cooling control unit (127) is arranged to control the stepper motor (312) towards opening of the valve (310) when the temperature of the power electronics unit (110) increases and/or towards closing of the valve when the temperature of the power electronics unit (110) decreases.

## Revendications

1. Dispositif de pompe à chaleur, comprenant :
un évaporateur (130),
un compresseur à régime variable (140),
une vanne de détente (150),
un condenseur (160),
une unité électronique de puissance (110) destinée à commander le compresseur à régime variable (140), et
une unité de refroidissement (120) destinée à refroidir l'unité électronique de puissance (110) ;
l'unité de refroidissement (120) présentant au moins un canal de refroidissement (121) destiné à refroidir l'unité électronique de puissance (110), une dérivation (122) disposée parallèlement à l'au moins un canal de refroidissement (121) et à l'unité électronique de puissance (110) et une unité de réglage (123, 124, 125, 126, 300) destinée à régler le débit volumique d'un agent de refroidissement traversant la dérivation (122), l'unité de refroidissement (120) présentant une unité de commande du refroidissement (127) qui commande le débit volumique de l'agent de refroidissement traversant la dérivation (122) et/ou l'au moins un canal de refroidissement (121) en fonction de la température de l'unité électronique de puissance (110),
le dispositif de pompe à chaleur étant conçu pour chauffer de l'eau de chauffage et/ou sanitaire, ladite eau de chauffage et/ou sanitaire constituant l'agent de refroidissement de l'unité de refroidissement (120),
l'unité de refroidissement (120) faisant partie du circuit de chauffage du dispositif de pompe à chaleur,
l'unité de refroidissement (120) étant reliée en amont au retour du chauffage (10) et en aval au départ du chauffage (20),
un débit volumique traversant le condenseur (150) via la dérivation (122).

2. Dispositif de pompe à chaleur selon la revendication 1, dans lequel l'unité de réglage (123-126, 300) présente une vanne (123, 124, 310) sur la dérivation (122) ou une pompe (125) en série avec l'au moins un canal de refroidissement (121).

3. Dispositif de pompe à chaleur selon l'une des revendications 1 et 2, dans lequel l'unité de réglage présente une unité de vanne (300) comportant un carter de vanne (302).

4. Dispositif de pompe à chaleur selon la revendication 3, dans lequel l'unité de vanne (300) comprend une vanne (310) et, en outre, un moteur pas à pas (312) configuré pour commander la vanne (310).

5. Dispositif de pompe à chaleur selon la revendication 4, dans lequel le siège de la vanne (310) est monté sur une bielle (312) du moteur pas à pas (312).

6. Dispositif de pompe à chaleur selon l'une des revendications 3 à 6, dans lequel le carter de vanne (302) comporte une prise pour un purgeur automatique (316).

7. Dispositif de pompe à chaleur selon la revendication 1 en combinaison avec la revendication 4 ou 5, dans lequel l'unité de commande du refroidissement (127) est conçue pour commander le moteur pas à pas (312) de manière à ouvrir la vanne (310) lorsque la température de l'unité électronique de puissance (110) augmente et/ou de manière à fermer la vanne (310) lorsque la température de l'unité électronique de puissance (110) diminue.
